# FASCICULE DE BREVET EUROPEEN

(11) **EP 3 578 849 B1**
(45) Date de publication et mention de la délivrance du brevet: **21.07.2021**
(21) Numéro de dépôt: 19178540.1
(22) Date de dépôt: 05.06.2019
(51) Int. Cl.: F16F 13/26

(54) **DISPOSITIF ANTIVIBRATOIRE HYDRAULIQUE ACTIF ET VÉHICULE COMPORTANT UN TEL DISPOSITIF ANTIVIBRATOIRE HYDRAULIQUE ACTIF**
AKTIVE HYDRAULISCHE SCHWINGUNGSDÄMPFENDE VORRICHTUNG UND FAHRZEUG, DAS EINE SOLCHE AKTIVE HYDRAULISCHE SCHWINGUNGSDÄMPFENDE VORRICHTUNG UMFASST
ACTIVE HYDRAULIC ANTI-VIBRATION DEVICE AND VEHICLE COMPRISING SUCH AN ACTIVE HYDRAULIC ANTI-VIBRATION DEVICE

(30) Priorité: 06.06.2018 FR 1854901
(43) Date de publication de la demande: 11.12.2019
(73) Titulaire: HUTCHINSON, 75008 Paris (FR)
(72) Inventeur: COUDIERE, Franck, 45190 CRAVANT (FR)
(74) Mandataire: Plasseraud IP

(56) Documents cités:
- EP-A1- 0 541 902
- EP-A2- 0 819 866
- EP-A2- 2 028 392
- WO-A1-2014/026495
- US-A- 5 905 317

## Description

### Domaine technique

La présente description est relative aux dispositifs antivibratoires hydrauliques actifs et aux véhicules automobiles comportant de tels dispositifs hydrauliques actifs, notamment entre le moteur et la caisse.

### Exposé de l'art antérieur

La demande EP-A-0 561 703 décrit un exemple de dispositif antivibratoire hydraulique actif pouvant être mis en œuvre entre un moteur et la caisse d'un véhicule automobile.

Cependant, les dispositifs antivibratoires hydrauliques actifs connus concernent généralement certaines motorisations de véhicules haut de gamme. Les autres motorisations de ces véhicules sont généralement équipées de dispositifs antivibratoires hydrauliques conventionnels. L'espace réservé pour l'implantation des dispositifs antivibratoires entre le moteur et la caisse est souvent le même pour les dispositifs antivibratoires hydrauliques conventionnels et les dispositifs antivibratoires actifs. Cet espace est souvent restreint, même pour l'implantation de dispositifs antivibratoires hydrauliques conventionnels.

Il est donc recherché d'implanter un dispositif antivibratoire hydraulique actif sensiblement dans le même encombrement qu'un dispositif antivibratoire hydraulique conventionnel ou, à tout le moins, dans un encombrement sensiblement de même taille. Or, le dispositif antivibratoire hydraulique actif comporte, outres les éléments composant le dispositif antivibratoire hydraulique conventionnel, au moins un actionneur et un piston déplacé par l'actionneur pour agir sur la pression dans la chambre de travail. L'actionneur nécessite une alimentation électrique. Ces différents éléments conduisent à une configuration particulièrement encombrante du dispositif antivibratoire.

En outre, pour faire fonctionner l'actionneur, il faut raccorder deux fils électriques à cet actionneur. Ces deux fils électriques doivent traverser la paroi du dispositif antivibratoire afin d'être reliés à un connecteur externe. Ainsi, l'étanchéité doit être garantie lors du passage du câble vis-à-vis de l'environnement extérieur mais aussi en interne, vis-à-vis du fluide contenu dans les chambres hydrauliques d'un tel dispositif antivibratoire. Les solutions connues pour assurer l'étanchéité des câbles ont l'inconvénient d'être encombrantes et d'être difficilement automatisables du fait de la mise en place de joints supplémentaires.

Le document EP 2 028 392 A2 décrit un support hydraulique actif, comprenant deux chambres hydrauliques séparées par une membrane en un matériau magnétisable. Un électroaimant est mis en œuvre pour déplacer la membrane.

### Résumé de la divulgation

La présente description a notamment pour but de présenter un dispositif antivibratoire hydraulique actif perfectionné par rapport aux dispositifs connus, d'encombrement limité.

À cette fin, il est décrit un dispositif antivibratoire hydraulique destiné à être interposé aux fins d'amortissement et de filtration entre des premier et deuxième éléments rigides, le dispositif antivibratoire hydraulique comprenant :
- une première armature destinée à être fixée au premier élément rigide,
- une deuxième armature destinée à être fixée au deuxième élément rigide,
- un corps en élastomère qui relie la première armature à la deuxième armature, ledit corps en élastomère étant adapté pour se déformer élastiquement selon une direction principale de vibration en permettant des mouvements relatifs entre la première armature et la deuxième armature, au moins selon ladite direction principale de vibration,
- une membrane en élastomère,
   dans lequel
- la deuxième armature forme ensemble avec le corps en élastomère et la membrane en élastomère, une première chambre hydraulique, dite chambre de travail,
- la deuxième armature reçoit un piston et un actionneur, l'actionneur étant adapté pour déplacer le piston selon la direction principale de vibration, de telle sorte que le déplacement du piston selon la direction principale de vibration, déforme la membrane en élastomère,
- l'actionneur comprend une bobine mobile en translation selon la direction principale de vibration, la bobine mobile étant solidaire du piston, l'actionneur comprenant en outre au moins un élément magnétique, solidaire de la deuxième armature, la bobine étant alimentée électriquement à travers un circuit électrique comprenant deux conducteurs s'étendant au moins en partie selon la direction principale de vibration, depuis une extrémité libre de la deuxième armature,
- la deuxième armature forme ensemble avec un soufflet en élastomère, une deuxième chambre hydraulique, dite chambre de compensation, la chambre de compensation étant annulaire et s'étendant autour des conducteurs,
- la chambre de travail et la chambre de compensation sont en communication de fluide à travers au moins un conduit formé dans la deuxième armature, et
- la chambre de travail, la chambre de compensation et le au moins un conduit sont remplis de fluide.

Ainsi, le dispositif antivibratoire est plus compact que les dispositifs connus. En outre, l'étanchéité est plus facilement réalisée que dans les dispositifs antivibratoires connus.

Dans divers modes de réalisation particuliers, le dispositif antivibratoire hydraulique peut notamment comporter une ou plusieurs des caractéristiques suivantes, prises seules ou en combinaison :
- les deux conducteurs traversent une pièce centrale, qui comprend une portion principale s'étendant selon la direction principale de vibration, depuis une extrémité libre de la deuxième armature, la pièce centrale étant de préférence surmoulée autour des deux conducteurs électriques ;
- la pièce centrale comprend une première portion sensiblement cylindrique, d'axe parallèle à la direction principale de vibration, la première portion s'étendant de préférence depuis une extrémité longitudinale libre de la deuxième armature jusqu'à une deuxième portion de la pièce centrale, la deuxième portion s'étendant depuis la première portion, sensiblement en biais par rapport à la direction principale de vibration jusqu'à une chambre délimitée par la deuxième armature, le piston et la membrane en élastomère ;
- la pièce centrale est fixée à la deuxième armature, de préférence par clipsage ;
- le dispositif antivibratoire hydraulique comprend une carte électronique fixée à la deuxième armature au niveau de l'extrémité libre de la deuxième armature, les deux conducteurs électriques étant reliés à des contacts électriques via la carte électronique ;
- la carte électronique est configurée pour former un accéléromètre, la carte électronique comprenant au moins un contact électrique, de préférence au moins deux contacts électriques, de préférence encore au moins trois contacts électriques, formant sortie(s) de l'accéléromètre ;
- le au moins un conduit comprend au moins une portion hélicoïdale s'étendant autour de l'actionneur et/ou du piston et/ou de la pièce centrale, le cas échéant, la portion hélicoïdale de chaque au moins un conduit, s'étendant de préférence sur au moins un demi-tour autour de la direction principale de vibration, de préférence sur un demi-tour, un tour ou deux tours autour de la direction principale de vibration ;
- chaque conduit comporte, outre la portion hélicoïdale :
   - une première portion s'étendant selon la direction principale de vibration ou selon une direction incluse dans un plan normal à la direction principale de vibration, la première portion mettant en communication de fluide la chambre de travail avec la portion hélicoïdale du conduit ; et/ou
   - une deuxième portion s'étendant selon la direction principale de vibration ou selon une direction incluse dans un plan normal à la direction principale de vibration, la deuxième portion mettant en communication de fluide la chambre de compensation avec la portion hélicoïdale du conduit ;
      chaque conduit étant de préférence constitué de la portion hélicoïdale et des première et deuxième portions ;
- la section de la portion hélicoïdale de chaque au moins un conduit est sensiblement constante ;
- le dispositif antivibratoire hydraulique comprend N conduits, avec N entier naturel supérieur ou égal à deux, dans lequel les N conduits sont décalés angulairement d'un angle égal à 360°/N autour de la direction principale de vibration ;
- l'actionneur est disposé entre la chambre de compensation et la chambre de travail, selon la direction principale de vibration ;
- la deuxième armature comporte une cassette hydraulique, la cassette hydraulique étant formée de deux pièces coaxiales, le ou les conduits étant au moins partiellement formés par des rainures à la surface d'au moins l'une des deux pièces coaxiales ;
- le dispositif antivibratoire hydraulique comprend un limiteur du débattement de la première armature par rapport à la deuxième armature selon la direction principale de vibration ; et
- les deux conducteurs s'étendent au moins en partie selon la direction principale de vibration, depuis l'extrémité libre de la deuxième armature opposée à la première armature.

Par ailleurs, la présente description a également pour objet un véhicule automobile comprenant un moteur, une caisse et au moins un dispositif antivibratoire hydraulique tel que décrit précédemment, dans toutes ses combinaisons, la première armature étant fixée au moteur et la deuxième armature étant fixée à la caisse.

Selon un autre aspect, il est décrit un dispositif antivibratoire hydraulique destiné à être interposé aux fins d'amortissement et de filtration entre des premier et deuxième éléments rigides, le dispositif antivibratoire hydraulique comprenant :
- une première armature destinée à être fixée au premier élément rigide,
- une deuxième armature destinée à être fixée au deuxième élément rigide,
- un corps en élastomère qui relie la première armature à la deuxième armature, ledit corps en élastomère étant adapté pour se déformer élastiquement selon une direction principale de vibration en permettant des mouvements relatifs entre la première armature et la deuxième armature, au moins selon ladite direction principale de vibration,
- une membrane en élastomère,
dans lequel :
- la deuxième armature forme ensemble avec le corps en élastomère et la membrane en élastomère, une première chambre hydraulique, dite chambre de travail,
- la deuxième armature reçoit un piston et un actionneur, l'actionneur étant adapté pour déplacer le piston selon la direction principale de vibration, de telle sorte que le déplacement du piston selon la direction principale de vibration, déforme la membrane en élastomère,
- l'actionneur est alimenté électriquement à travers un circuit électrique s'étendant jusqu'à une carte électronique fixée à la deuxième armature, de préférence à l'extérieur de la deuxième armature, la carte électronique étant configurée pour former un accéléromètre, la carte électronique étant reliée à deux contacts électriques, à l'extérieur de la deuxième armature, reliés au circuit électrique, et à au moins un contact électrique, de préférence au moins deux contacts électriques, de préférence encore au moins trois contacts électriques, à l'extérieur de la deuxième armature, formant sortie(s) de l'accéléromètre ;
- la deuxième armature forme ensemble avec un soufflet en élastomère, une deuxième chambre hydraulique, dite chambre de compensation,
- la chambre de travail et la chambre de compensation sont en communication de fluide à travers au moins un conduit formé dans la deuxième armature, et
- la chambre de travail, la chambre de compensation et le au moins un conduit sont remplis de fluide.

### Brève description des dessins

D'autres caractéristiques et avantages du dispositif antivibratoire hydraulique apparaîtront à la lecture de la description suivante d'un exemple de réalisation, donné à titre d'exemple non limitatif, en regard des dessins joints, sur lesquels :
- la figure 1 représente schématiquement la partie avant d'un véhicule automobile équipé d'au moins un dispositif antivibratoire hydraulique entre la caisse et le moteur ;
- la figure 2 représente schématiquement en vue de face un exemple de dispositif antivibratoire pouvant être mis en œuvre dans le véhicule automobile de la figure 1 ;
- la figure 3 représente schématiquement en coupe longitudinale le dispositif antivibratoire de la figure 2 ;
- la figure 4 représente schématiquement en coupe longitudinale selon un plan perpendiculaire au plan de coupe de la figure 3, le dispositif antivibratoire hydraulique de la figure 2 ; et
- la figure 5 est une vue éclatée de la cassette hydraulique du dispositif antivibratoire hydraulique de la figure 2.

### Description détaillée d'exemples de réalisation

Sur les différentes figures, les mêmes références désignent des éléments identiques ou similaires.

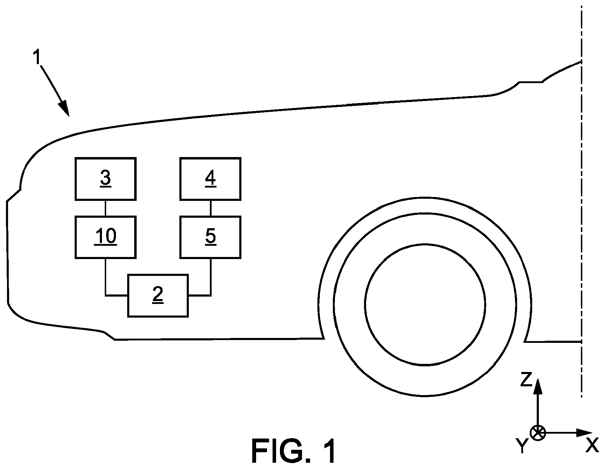

La figure 1 représente schématiquement un véhicule automobile 1 comportant une caisse 2 sur laquelle sont montés un moteur 3 et une boîte de vitesses 4. Le moteur 3 est en particulier un moteur à combustion interne. Au moins un dispositif antivibratoire 10, ici de type hydraulique, est disposé entre le moteur 3 et la caisse 2. De même, au moins un dispositif antivibratoire 5 est interposé entre la boîte de vitesses 4 et la caisse 2.

Dans la suite de la description :
- la direction X s'entend de la direction longitudinale du véhicule automobile 1, orientée de l'avant du véhicule automobile 1 vers l'arrière du véhicule automobile 1, en mode normal d'utilisation du véhicule automobile. Ainsi, la direction X s'entend sur la figure 1 d'une direction sensiblement horizontale, orientée de la gauche de la figure vers la droite de la figure.

La direction Y s'entend d'une direction transversale du véhicule automobile, sensiblement horizontale et s'étendant de la gauche du véhicule automobile 1 vers la droite du véhicule automobile 1 (lorsqu'on regarde le véhicule automobile depuis l'arrière de celui-ci). Ainsi, sur la figure 1, la direction Y s'entend d'une direction normale au plan de la figure 1, s'étendant vers l'arrière de la feuille.

La direction Z, enfin, s'entend de la direction verticale, orientée vers le haut.

Dans la suite on décrit plus particulièrement un exemple de dispositif antivibratoire 10 disposé entre le moteur 3 et la caisse 2.

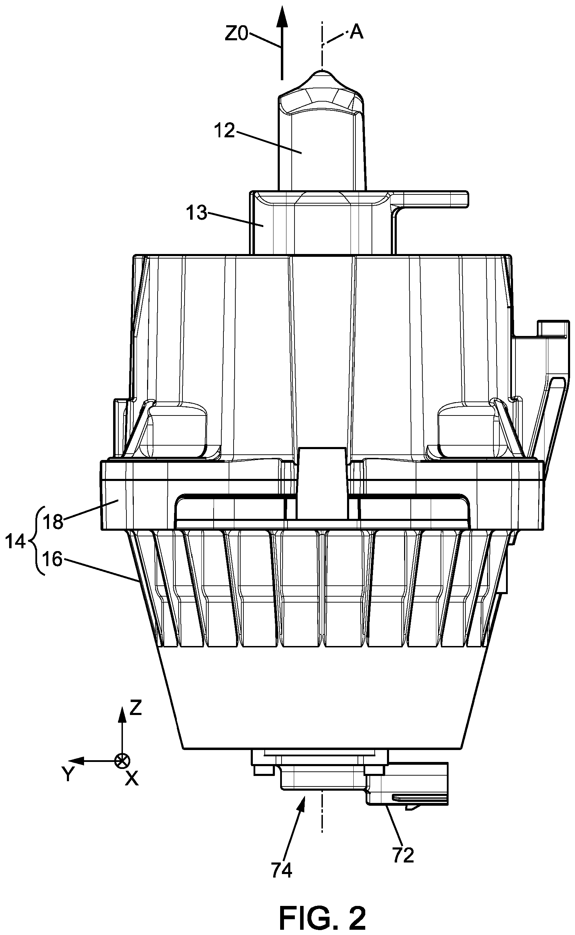

La figure 2 illustre un tel dispositif antivibratoire 10, vu de face. Le dispositif antivibratoire 10 est destiné à être interposé aux fins d'amortissement et de filtration entre le moteur 3 et la caisse 2 du véhicule 1, notamment afin d'amortir les vibrations du moteur 3 selon une direction principale de vibration Z0. La direction principale de vibration ZO peut correspondre sensiblement à la direction verticale Z ou peut être inclinée par rapport à cette direction verticale Z.

Le dispositif antivibratoire 10 comprend tout d'abord une première armature 12 destinée à être fixée au moteur 3 du véhicule automobile 1. Ceci peut notamment être réalisé au moyen d'un bras intermédiaire, non représenté, entre la première armature 12 et le moteur 3. Ici, la première armature 12 est entourée, sur une partie de sa hauteur, par un manchon 13 en matériau élastomère. La première armature 12 est par exemple en métal.

Le dispositif antivibratoire 10 comprend également une deuxième armature 14. Sur l'exemple des figures 2 à 4, cette deuxième armature 14 se compose d'une cassette hydraulique 16 et d'un limiteur 18 du débattement de la première armature 12. La cassette hydraulique 16 et le limiteur de débattement 18 sont fixés ensemble par tout moyen adapté, accessible à l'homme de l'art. Par exemple, la cassette hydraulique 16 et le limiteur de débattement 18 sont fixés ensemble par clipsage, comme sur l'exemple représenté. En variante, cependant, la cassette hydraulique 16 et le limiteur de débattement 18 sont fixés ensemble par vissage, par rivetage, ou au moyen d'une déformation plastique de l'un parmi la cassette hydraulique 16 et le limiteur de débattement 18. La cassette hydraulique 16 est par exemple en plastique. Le limiteur de débattement 18 est par exemple en métal, notamment en alliage d'aluminium.

Le limiteur de débattement 18 a par exemple une forme de couvercle, délimitant avec la cassette hydraulique 16 un espace intérieur 20. La première armature 12 est partiellement reçue dans cet espace intérieur 20. La première armature 12 traverse également un trou 22 dans le limiteur de débattement 18, à la hauteur où la première armature 12 est recouverte latéralement par le manchon 13 en élastomère. Ainsi, le limiteur 18 permet de limiter le débattement latéral de la première armature 12 par rapport à la deuxième armature 14, tout en évitant un contact direct entre la première armature 12 et le limiteur de débattement 18 qui provoquerait un bruit désagréable pour les occupants du véhicule automobile 1 et qui pourrait conduire, avec le temps, à la rupture de la première armature 12 et/ou du limiteur de débattement 18.

La deuxième armature 14 comporte également un ou plusieurs trous 24 pour la fixation de la deuxième armature 14 à la caisse 2 du véhicule automobile 1. Par exemple, des vis peuvent être mises en œuvre pour fixer la deuxième armature 14 (et avec elle le dispositif antivibratoire 10) à la caisse 2, les vis s'étendant à travers les trous 24.

Un corps en élastomère 26 relie la première armature 12 à la deuxième armature 14, en particulier à la cassette hydraulique 16. Ce corps en élastomère 26 vise à filtrer les vibrations de la première armature 12 par rapport à la deuxième armature 14, cette filtration s'accompagnant d'une déformation élastique du corps en élastomère 26. Cette filtration est principalement réalisée dans la direction principale ZO des vibrations du moteur 3. Le corps en élastomère 26 peut être fixé à la première armature 12 et à la deuxième armature 14 par tout moyen adapté, accessible à l'homme de l'art. Notamment, le corps en élastomère 26 peut être surmoulé sur l'une et/ou l'autre des armatures 12, 14 et/ou adhérisé à l'une et/ou l'autre des armatures 12, 14. Alternativement, une âme rigide peut être noyée dans le corps en élastomère 26 et cette âme rigide peut être clipsée ou, plus généralement, solidarisée à l'une ou à l'autre des armatures 12, 14.

La cassette hydraulique 16 peut avoir une forme générale à symétrie de révolution. Notamment, la cassette hydraulique 16 peut avoir une forme générale tronconique. La base de la cassette hydraulique 16 peut alors former une extrémité libre de la cassette hydraulique 16 et du dispositif antivibratoire 10.

Sur la cassette hydraulique 16 est fixée une rondelle 28, rigide. Cette rondelle 28 est par exemple en plastique ou en aluminium. Une membrane en élastomère 30 est adhérée sur cette rondelle 28 rigide. Cette membrane en élastomère 30 peut notamment être surmoulée à la rondelle 28. La membrane en élastomère 30 s'étend dans l'ouverture centrale définie par la rondelle 28 rigide. Un piston 32 est fixé à la membrane en élastomère 30, ici sensiblement en son centre pour permettre une déformation de la membrane en élastomère 30 en cas de déplacement du piston 32, sous l'effet d'un actionneur 34 qui sera décrit plus en détails ci-après. La membrane en élastomère 30 est par exemple surmoulée sur le piston 32 ou adhérisée au piston 32 par tout procédé accessible à l'homme de l'art.

Le corps en élastomère 26, la rondelle 28 rigide et la membrane en élastomère 30 définissent ici une première chambre hydraulique 36 ou chambre de travail. Cette chambre de travail 36 est remplie de fluide. Par exemple, le fluide est de l'éthylène glycol.

Une deuxième chambre hydraulique 38 ou chambre de compensation est définie par la deuxième armature 14 et un soufflet 40 en élastomère. La chambre de compensation 38 est également remplie de fluide, notamment d'éthylène glycol.

Les chambres de travail 36 et de compensation 38 sont en communication de fluide à travers au moins un conduit 42, 44, en l'espèce à travers deux conduits 42, 44. Les deux conduits 42, 44 sont également remplis de fluide, notamment d'éthylène glycol.

Chaque conduit 42, 44 se compose ici :
- d'une première portion 42₁, 44₁ s'étendant sensiblement selon la direction principale de vibration Z0,
- d'une deuxième portion 42₂ s'étendant sensiblement dans un plan normal à la direction principale de vibration Z0, et
- d'une portion hélicoïdale 42₃, 44₃, s'étendant entre la première portion 42₁, 44₁, et la deuxième portion 42₂.

La première portion 42₁, 44₁ met en communication de fluide la portion hélicoïdale 42₃, 44₃ de chaque conduit 42, 44 avec la chambre de travail 36, ici via des ouvertures 45 dans la rondelle 28 en plastique rigide.

La deuxième portion 42₂, 44₂ met en communication de fluide la portion hélicoïdale 42₃, 44₃ de chaque conduit 42, 44 avec la chambre de compensation 38.

Il est à noter ici que les sections de la première portion 42₁, 44₁ et de la portion hélicoïdale 42₃, 44₃ sont sensiblement égales. Ici, ces sections sont également supérieures à la section de la deuxième portion 42₂, 44₂. La deuxième portion 42₂, 44₂ forme ainsi un passage étranglé pour le fluide vers la chambre de compensation 38.

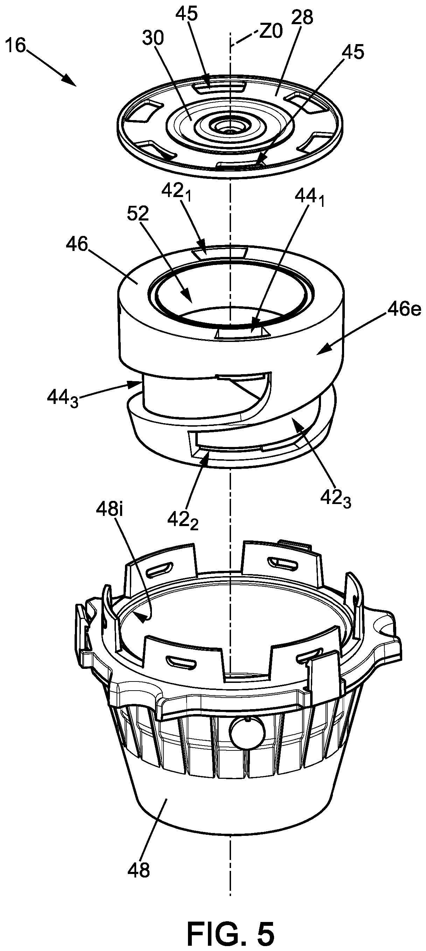

Comme cela est particulièrement visible sur la figure 5, la cassette hydraulique 16 est ici réalisée par l'assemblage de deux pièces 46, 48 :
- une bague 46 interne, et
- une coque 48 externe, recevant la bague interne 46.

La bague 46 forme ici les deux premières et deuxièmes portions 42₁, 44₁, 42₂, des conduits 42, 44. La bague 46 présente également sur sa face externe 46e des rainures formant, par coopération avec la face interne 48i de la coque 48, les portions hélicoïdales 42₃, 44₃ des conduits 42, 44.

La coque 48 peut présenter à son extrémité opposée au limiteur 18 une ouverture (non visible sur les figures). Cette ouverture permet d'évacuer l'air présent au voisinage du soufflet 40, à l'extérieur de la chambre de compensation 38, vers l'extérieur du dispositif antivibratoire 10, en cas de déformation du soufflet 40.

Le logement 52 à l'intérieur de la bague 46 reçoit l'actionneur 34 commandant le déplacement du piston 32.

L'actionneur 34 comporte ici :
- un élément magnétique 54, par exemple un aimant permanent, fixe par rapport à la cassette hydraulique 16, et
- une bobine 56 solidaire du piston 32,
- le tout étant monté dans une carcasse ferromagnétique 58 (ou culasse ferromagnétique) solidaire de la bague 46 de façon à créer un circuit magnétique se refermant à travers un élément ferromagnétique 55 et des entrefers de faible épaisseur.

Une telle configuration où la bobine 56 est mobile avec le piston 32 est préférée pour assurer l'efficacité de l'actionneur à hautes fréquences. La bobine 56 est en effet généralement moins lourde que l'aimant 54, ce qui assure une plus faible inertie à l'équipage mobile piston 32 + bobine 56 par rapport à un équipage mobile comprenant le piston 32 et l'aimant 54.

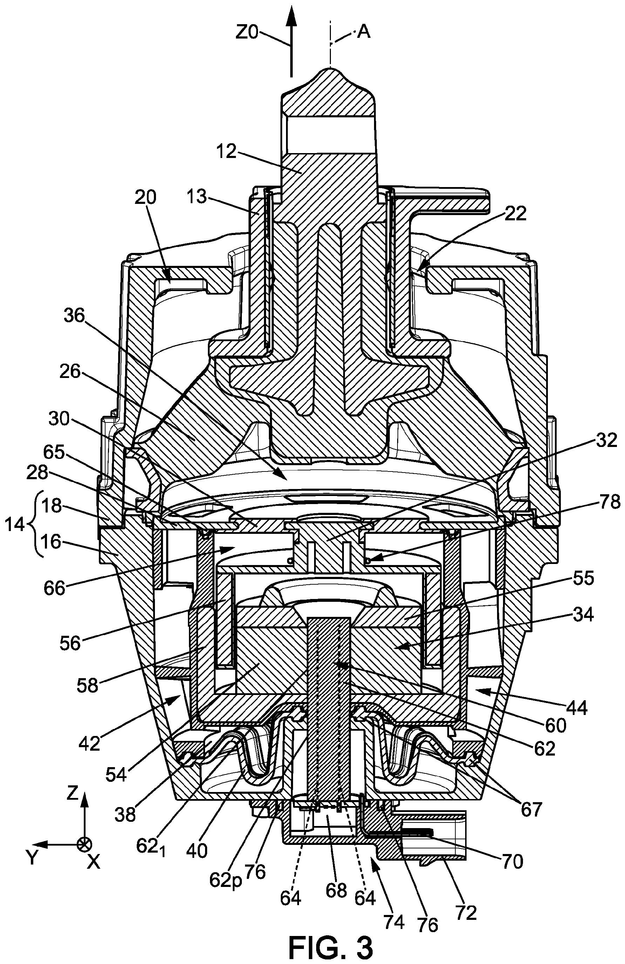

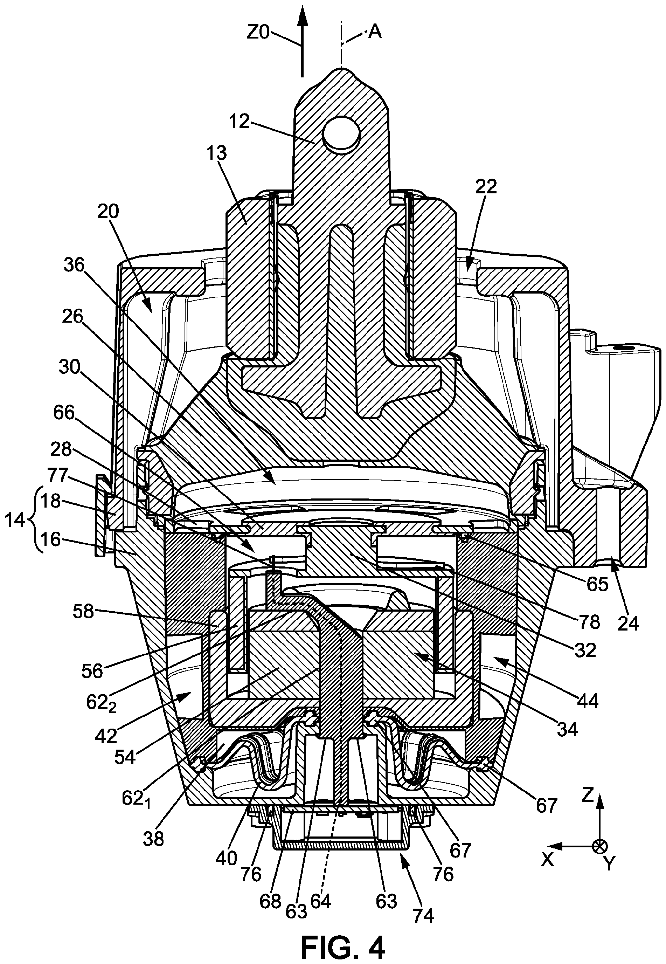

L'actionneur 34 est disposé, tel que cela est visible sur les figures 3 et 4, entre la chambre de travail 36 et la chambre de compensation 38, selon la direction principale de vibration ZO. En outre, ici, la portion hélicoïdale 42₃, 44₃ de chaque conduit 42, 43 s'étend autour de l'actionneur 34 et de la partie du piston 32 traversant l'actionneur 34. On obtient ainsi un dispositif 10 compact.

La compacité du dispositif antivibratoire hydraulique est encore améliorée du fait de la direction d'extension des premières et deuxièmes portions 42₁, 44₁, 44₁ des conduits 42, 44.

Par ailleurs, la compacité du dispositif antivibratoire 10 est ici améliorée du fait que la bobine 56 de l'actionneur 34 est alimentée en électricité par un circuit électrique 60 comprenant deux conducteurs 64 s'étendant en partie selon la direction de l'axe longitudinal A du dispositif antivibratoire 10 correspondant à la direction principale de vibration ZO, depuis l'extrémité libre, ici inférieure, de la deuxième armature 14, opposée à la première armature 12. En outre, ici, les conducteurs 64 traversent une pièce centrale 62. La pièce centrale 62 est ici en plastique, de préférence rigide. La pièce centrale 62 comprend une portion principale 62p s'étendant selon la direction principale de vibration Z0 - en l'espèce selon l'axe longitudinal A du dispositif antivibratoire 10. La pièce centrale 62 s'étend, comme cela est visible sur les figures 3 et 4, notamment, depuis une extrémité libre de la deuxième armature 14, en l'espèce depuis une extrémité libre de la cassette hydraulique 16, opposée à la première armature 12. En l'espèce, la pièce centrale 62 est fixée sur la cassette hydraulique 16. Ici, la pièce centrale 62 est fixée sur la cassette hydraulique 16 par clipsage, la pièce centrale présentant des ergots de clipsage 63, visible sur la figure 4.

Les deux conducteurs 64 s'étendent ici depuis une extrémité longitudinale de la pièce centrale 62 jusqu'à une deuxième extrémité longitudinale de la pièce centrale 62, opposée à la première extrémité longitudinale. La pièce centrale 62 telle qu'illustrée aux figures 3 et 4 comprend une première portion 62₁ sensiblement cylindrique par morceaux, d'axe parallèle à la direction principale de vibration Z0. La première portion 62₁ s'étend ici depuis une extrémité longitudinale libre de la cassette hydraulique 16 jusqu'à une deuxième portion 62₂ de la pièce centrale 62. Cette première portion 62₁ s'étend en l'espèce au niveau de la chambre de compensation 38 qui est annulaire, et de l'aimant 54, qui est également annulaire. La deuxième portion 62₂ de la pièce centrale s'étend depuis la première portion 62₁, sensiblement en biais par rapport à la direction principale de vibration Z0, jusqu'à une chambre 66 délimitée par la deuxième armature 14, ici la bague 46, le piston 32 et la membrane en élastomère 30. Cette chambre 66 est remplie de gaz, notamment d'air. Son étanchéité vis-à-vis de la chambre de travail 36 est assurée notamment par la membrane en élastomère 30.

Ainsi, la position des conducteurs 64, dans un logement sensiblement central, limite voire évite les problèmes d'étanchéités rencontrés avec les dispositifs de l'art antérieur.

L'étanchéité entre la chambre de travail 36 et les conducteurs 64 dans la chambre 66 est notamment assurée par un joint 65 ici formé par la membrane en élastomère 30, le joint 65 étant disposé entre la rondelle 28 et la bague 46. Un autre joint peut être prévu entre le piston et la membrane en élastomère 30. Ici, cet autre joint est également formé par la membrane en élastomère 30.

Par ailleurs, l'étanchéité entre la chambre de compensation 38 et les conducteur 64 peut être assurée par des joints 67 interposés entre la bague 46 et la coque 48 de la cassette hydraulique 16. Ici, ces joints 67 sont formés directement par le soufflet 40. Pour ce faire, dans l'exemple illustré aux figures 3 et 4, le soufflet 40 présente deux bourrelets qui sont pincés entre la bague 46 et la coque 48.

Au contraire, si les conducteurs 64 s'étendaient sensiblement radialement depuis la face latérale du dispositif vibratoire 10, alors il y aurait un risque de contact entre ces conducteurs 64 et l'éthylène glycol compris dans le dispositif antivibratoire. Notamment, du fait que la cassette hydraulique 16 et, en particulier, les conduits 42, 44 sont délimités par la bague 46 et la coque 48, du liquide pourrait migrer, notamment par capillarité, entre ces pièces jusqu'aux conducteurs 64. Un tel défaut est ici évité.

Par ailleurs, le fait que les conducteurs 64 soient reçus dans une pièce centrale 62 rigide facilite le montage du dispositif antivibratoire 10. En effet, la fixation rigide, par exemple par clipsage, de la pièce centrale 62 sur la seconde armature 14, assure le positionnement des conducteurs 64 dans le dispositif antivibratoire 10, notamment par rapport à une carte électronique 68 (ou circuit imprimé) qui va être décrite ci-dessous.

La carte électronique 68 est fixée à la deuxième armature, à l'extrémité opposée à la chambre 66, de la pièce centrale 62. La carte électronique 68 est ici fixée à la deuxième armature 14, en particulier à la cassette hydraulique et, plus précisément encore, ici, à la coque 48. La carte électronique 68 est ici fixée à l'extérieur de la deuxième armature 14. Les conducteurs 64 sont de préférence saillants de la pièce centrale 62, pour être reliés à des pistes conductrices sur la carte électronique 68. Les pistes conductrices relient ainsi les conducteurs 64 à des contacts électriques 70, notamment à des fiches mâles ou femelles 70. Les fiches 70, mâles ou femelles, peuvent être intégrées dans un connecteur 72 respectif ou, de préférence, dans un connecteur 72 commun. Le ou les connecteurs 72 peuvent être intégrés à un capot 74 recouvrant également la carte électronique 68 et qui assure l'étanchéité du logement de réception de la carte électronique 68, défini par ce capot 74 et la cassette hydraulique 14. Un ou des joints d'étanchéité 76 peuvent le cas échéant être interposés entre le capot 74 et la cassette hydraulique 14.

De manière particulièrement intéressante, la carte électronique 68 peut être configurée de manière à former un accéléromètre. Pour ce faire, la carte électronique peut être munie de moyens de mesure de l'accélération, par exemple des MEMS (pour l'anglais « Microelectromechanical systems », microsystème électromécanique). D'autres moyens de mesure de l'accélération peuvent être mis en œuvre. De manière générale, l'homme du métier sait comment réaliser un capteur d'accélération sur une carte électronique de sorte qu'une telle configuration n'est pas décrite plus en détails ici. De manière avantageuse, la carte électronique 68 comporte des contacts électriques, par exemples des fiches mâles ou femelles 70, formant par exemple un, deux ou trois sorties du capteur d'accélération formé sur la carte électronique. Ces fiches mâles ou femelles 70 peuvent être regroupées dans un connecteur 72 distinct ou, de préférence, être regroupées dans un même et unique connecteur 72 avec les fiches 70 reliées aux conducteurs 64. Ainsi, un seul connecteur 72 peut être relié aux conducteurs 64 et permettre, en même temps, de transférer des données sur les accélérations mesurées par la carte électronique 68, au niveau de la cassette hydraulique 16. La carte électronique 68 permet ainsi de mesurer les vibrations de la caisse, en aval du dispositif antivibratoire 10, dans l'axe de travail Z0 du dispositif antivibratoire 10.

Les conducteurs 64 sont également saillants à l'extrémité de la pièce centrale 62 reçue dans la chambre 66. Les conducteurs 64 peuvent notamment y prendre la forme de connecteurs 77 mâles ou femelles, adaptés à être reliés à un fil électrique 78 chacun. Alternativement, les conducteurs 64 sont reliés, au niveau de cette extrémité de la pièce centrale 62 dans la chambre 66, à de tels connecteurs 77. Les fils électriques 78 peuvent être reliés à la bobine 56 ou former la bobine 56. Les fils électriques 78 forment de préférence une boucle pour éviter la fatigue de ces fils électriques 78 lorsque le piston 32 et la bobine 56 se déplacent alors que la pièce centrale 62 reste sensiblement immobile par rapport à la cassette hydraulique 16.

Le fonctionnement du dispositif antivibratoire hydraulique 10 est décrit ci-après.

Les vibrations du système moteur sur sa suspension vis-à-vis de la caisse, à sa fréquence propre, qui est généralement comprise entre 5 et 20 Hz, se traduisent par des variations de volume de relativement grande amplitude de la chambre de travail 36, qui entraînent des déformations de la chambre de compensation 38. Ainsi, ces vibrations sont compensées par « effet de batteur », par le déplacement du fluide dans les conduits 42, 44 en opposition de phase avec les déplacements du moteur. La longueur et la section des conduits sont dimensionnées pour adapter la fréquence de l'effet de batteur du déplacement du fluide à la fréquence propre du système formé par le moteur sur sa suspension vis-à-vis de la caisse du véhicule.

Les vibrations à fréquences plus élevées, par exemple aux fréquences comprises entre 20 et 200 Hz, peuvent être compensées à l'aide de l'actionneur 34 et du piston 32. Dans ce cas, le piston 32 et la membrane en élastomère 30 engendrent, par leur mouvement, des vibrations de la caisse 2, en opposition de phase avec les vibrations provenant du moteur, afin que ces vibrations se compensent au niveau de la caisse du véhicule 2. L'actionneur 34 ne permet en général de compenser qu'un nombre limité de vibrations provenant du moteur, ces vibrations correspondant à des fréquences distinctes.

Enfin, les vibrations aux fréquences les plus élevées sont filtrées au moyen du corps en élastomère 26. Par filtration, on entend ici essentiellement un amortissement des vibrations qui est fonction de leur fréquence. La filtration permet ainsi de supprimer sensiblement totalement certaines vibrations, correspondant à des fréquences déterminées.

Bien entendu la présente divulgation n'est nullement limitée aux exemples de réalisation décrits précédemment, à titre illustratif et non limitatif. Au contraire, de nombreuses variantes sont accessibles à l'homme de l'art.

Le dispositif antivibratoire décrit est interposé entre le moteur 3 et la caisse 2 du véhicule automobile 1. Alternativement, ce dispositif antivibratoire hydraulique est interposé entre la boîte de vitesses 4 et la caisse 2 du véhicule automobile 1, par exemple.

Dans l'exemple, la portion hélicoïdale de chaque conduit s'étend sur un demi-tour autour de la direction principale de vibration. Cette portion hélicoïdale de chaque conduit peut s'étendre de préférence sur au-moins un demi-tour, autour de la direction principale de vibration, de préférence encore sur un tour ou deux tours autour de la direction principale de vibration.

Les conduits peuvent être au nombre de deux ou plus. Dans ce cas, il est particulièrement avantageux que les conduits soient décalés angulairement d'un angle égal à 360°/N où N est le nombre de conduits.

Également la première portion de chaque conduit peut s'étendre selon une direction incluse dans un plan normal à la direction principale de vibration et/ou la deuxième portion peut s'étendre selon la direction principale de vibration.

Dans l'exemple, chaque conduit est constitué de la portion hélicoïdale et des première et deuxième portions. Alternativement, un ou chaque conduit peut comporter au moins une portion supplémentaire.

La chambre de compensation est opposée à la chambre de travail par rapport à l'actionneur dans l'exemple décrit, de sorte que l'actionneur est interposé entre la chambre de travail et la chambre de compensation dans la direction principale de vibration. Alternativement, cependant, la chambre de compensation peut être disposée latéralement. Dans ce cas, la chambre de compensation, l'actionneur et la chambre de travail ne sont plus alignés selon la direction principale de vibration.

Enfin, les conducteurs 64 peuvent ne pas être reçus, notamment noyé, dans une pièce rigide. Ils peuvent notamment s'étendre librement entre l'extrémité libre de la cassette hydraulique 16 et la chambre 66 ou être supportés par une feuille flexible, notamment une feuille plastique flexible.

## Revendications

1. Dispositif antivibratoire hydraulique (10) destiné à être interposé aux fins d'amortissement et de filtration entre des premier (3 ; 4) et deuxième (2) éléments rigides, le dispositif antivibratoire hydraulique (10) comprenant :
- une première armature (12) destinée à être fixée au premier élément rigide (3 ; 4),
- une deuxième armature (14) destinée à être fixée au deuxième élément rigide (2),
- un corps en élastomère (26) qui relie la première armature (12) à la deuxième armature (14), ledit corps en élastomère (26) étant adapté pour se déformer élastiquement selon une direction principale de vibration (Z0) en permettant des mouvements relatifs entre la première armature (12) et la deuxième armature (14), au moins selon ladite direction principale de vibration (Z0),
- une membrane en élastomère (30),
dans lequel
- la deuxième armature (14) forme ensemble avec le corps en élastomère (26) et la membrane en élastomère (30), une première chambre hydraulique (36), dite chambre de travail (36),
- la deuxième armature (14) reçoit un piston (32) et un actionneur (34), l'actionneur (34) étant adapté pour déplacer le piston (32) selon la direction principale de vibration (Z0), de telle sorte que le déplacement du piston (32) selon la direction principale de vibration (Z0), déforme la membrane en élastomère (30),
- l'actionneur (34) comprend une bobine (56) mobile en translation selon la direction principale de vibration (Z0), la bobine (56) mobile étant solidaire du piston (32), l'actionneur (34) comprenant en outre au moins un élément magnétique, solidaire de la deuxième armature (14), la bobine (56) étant alimentée électriquement à travers un circuit électrique (60) comprenant deux conducteurs (64) s'étendant au moins en partie selon la direction principale de vibration (Z0), depuis une extrémité libre de la deuxième armature (14),
- la deuxième armature (14) forme ensemble avec un soufflet (40) en élastomère, une deuxième chambre hydraulique (38), dite chambre de compensation (38), la chambre de compensation (38) étant annulaire et s'étendant autour des conducteurs (64),
- la chambre de travail (36) et la chambre de compensation (38) sont en communication de fluide à travers au moins un conduit (42 ; 44) formé dans la deuxième armature (14), et
- la chambre de travail (36), la chambre de compensation (38) et le au moins un conduit (42 ; 44) sont remplis de fluide.

2. Dispositif antivibratoire hydraulique selon la revendication 1, dans lequel les deux conducteurs (64) traversent une pièce centrale (62), qui comprend une portion principale s'étendant selon la direction principale de vibration (Z0), depuis une extrémité libre de la deuxième armature (14), la pièce centrale (62) étant de préférence surmoulée autour des deux conducteurs électriques (64).

3. Dispositif antivibratoire hydraulique selon la revendication 2, dans lequel la pièce centrale (62) comprend une première portion sensiblement cylindrique, d'axe parallèle à la direction principale de vibration (Z0), la première portion s'étendant de préférence depuis une extrémité longitudinale libre de la deuxième armature (14) jusqu'à une deuxième portion de la pièce centrale (62), la deuxième portion s'étendant depuis la première portion, sensiblement en biais par rapport à la direction principale de vibration (Z0) jusqu'à une chambre (66) délimitée par la deuxième armature (14), le piston (32) et la membrane en élastomère (30).

4. Dispositif antivibratoire hydraulique selon la revendication 2 ou 3, dans lequel la pièce centrale (62) est fixée à la deuxième armature (14), de préférence par clipsage.

5. Dispositif antivibratoire hydraulique selon l'une des revendications 1 à 4, comprenant une carte électronique (68) fixée à la deuxième armature (14) au niveau de l'extrémité libre de la deuxième armature, les deux conducteurs électriques (64) étant reliés à des contacts électriques (70) via la carte électronique (68).

6. Dispositif antivibratoire hydraulique selon la revendication 5, dans lequel la carte électronique (68) est configurée pour former un accéléromètre, la carte électronique (68) comprenant au moins un contact électrique (70), de préférence au moins deux contacts électriques (70), de préférence encore au moins trois contacts électriques (70), formant sortie(s) de l'accéléromètre.

7. Dispositif antivibratoire hydraulique selon l'une quelconque des revendications précédentes, dans lequel le au moins un conduit (42 ; 44) comprend au moins une portion hélicoïdale (42₃ ; 44₃) s'étendant autour de l'actionneur (34) et/ou du piston (32) et/ou de la pièce centrale (62), le cas échéant, la portion hélicoïdale (42₃ ; 44₃) de chaque au moins un conduit (42 ; 44), s'étendant de préférence sur au moins un demi-tour autour de la direction principale de vibration (Z0), de préférence sur un demi-tour, un tour ou deux tours autour de la direction principale de vibration (Z0).

8. Dispositif antivibratoire hydraulique selon la revendication 7, dans lequel chaque conduit (42 ; 44) comporte, outre la portion hélicoïdale (42₃ ; 44₃) :
- une première portion (42₁; 44₁) s'étendant selon la direction principale de vibration (Z0) ou selon une direction incluse dans un plan normal à la direction principale de vibration (Z0), la première portion (42₁ ; 44₁) mettant en communication de fluide la chambre de travail (36) avec la portion hélicoïdale (42₃ ; 44₃) du conduit (42 ; 44) ; et/ou
- une deuxième portion (42₂) s'étendant selon la direction principale de vibration (Z0) ou selon une direction incluse dans un plan normal à la direction principale de vibration (Z0), la deuxième portion (42₂) mettant en communication de fluide la chambre de compensation (38) avec la portion hélicoïdale (42₃ ; 44₃) du conduit (42 ; 44) ;
chaque conduit (42 ; 44) étant de préférence constitué de la portion hélicoïdale (42₃ ; 44₃) et des première et deuxième portions (42₁ ; 44₁ ; 42₂).

9. Dispositif antivibratoire hydraulique selon la revendication 7 ou 8, dans lequel la section de la portion hélicoïdale (42₃ ; 44₃) de chaque au moins un conduit (42 ; 44) est sensiblement constante.

10. Dispositif antivibratoire hydraulique selon l'une quelconque des revendications précédentes, comprenant N conduits (42, 44), avec N entier naturel supérieur ou égal à deux, dans lequel les N conduits (42, 44) sont décalés angulairement d'un angle égal à 360°/N autour de la direction principale de vibration (Z0).

11. Dispositif antivibratoire hydraulique selon l'une quelconque des revendications précédente, dans lequel l'actionneur (34) est disposé entre la chambre de compensation (38) et la chambre de travail (36), selon la direction principale de vibration (Z0).

12. Dispositif antivibratoire hydraulique selon l'une quelconque des revendications précédentes, dans lequel la deuxième armature (14) comporte une cassette hydraulique (16), la cassette hydraulique (16) étant formée de deux pièces (46 ; 48) coaxiales, le ou les conduits (42 ; 44) étant au moins partiellement formés par des rainures à la surface d'au moins l'une des deux pièces (46 ; 48) coaxiales.

13. Dispositif antivibratoire hydraulique selon l'une quelconque des revendications précédentes, comprenant un limiteur (18) du débattement de la première armature (12) par rapport à la deuxième armature (14) selon la direction principale de vibration (Z0).

14. Dispositif antivibratoire hydraulique selon l'une quelconque des revendications précédentes, dans lequel les deux conducteurs (64) s'étendent au moins en partie selon la direction principale de vibration (Z0), depuis l'extrémité libre de la deuxième armature (14) opposée à la première armature (12).

15. Véhicule automobile (1) comprenant un moteur (3), une caisse (2) et au moins un dispositif antivibratoire (10) hydraulique selon l'une quelconque des revendications précédentes, la première armature (12) étant fixée au moteur (3) et la deuxième armature (14) étant fixée à la caisse (2).

## Patentansprüche

1. Hydraulische Antivibrationsvorrichtung (10), die dazu bestimmt ist, zu Dämpfungs- und Filterungszwecken zwischen einem ersten (3; 4) und einem zweiten (2) starren Element angeordnet zu werden, wobei die hydraulische Antivibrationsvorrichtung (10) umfasst:
- eine erste Armatur (12), die dazu bestimmt ist, an dem ersten starren Element (3; 4) befestigt zu werden,
- eine zweite Armatur (14), die dazu bestimmt ist, an dem zweiten starren Element (2) befestigt zu werden,
- einen Elastomerkörper (26), der die erste Armatur (12) mit der zweiten Armatur (14) verbindet, wobei der Elastomerkörper (26) dazu ausgebildet ist, sich entlang einer Hauptvibrationsrichtung (Z0) elastisch zu verformen, indem Relativbewegungen zwischen der ersten Armatur (12) und der zweiten Armatur (14) wenigstens entlang der Hauptvibrationsrichtung (Z0) erlaubt sind,
- eine Elastomermembran (30),
wobei
- die zweite Armatur (14) zusammen mit dem Elastomerkörper (26) und der Elastomermembran (30) eine erste Hydraulikkammer (36) bildet, als Arbeitskammer (36) bezeichnet,
- die zweite Armatur (14) einen Kolben (32) und einen Aktuator (34) aufnimmt, wobei der Aktuator (34) dazu ausgebildet ist, den Kolben (32) entlang der Hauptvibrationsrichtung (Z0) derart zu verlagern, dass die Verlagerung des Kolbens (32) entlang der Hauptvibrationsrichtung (Z0) die Elastomermembran (30) verformt,
- der Aktuator (34) eine Spule (56) umfasst, die entlang der Hauptvibrationsrichtung (Z0) translatorisch beweglich ist, wobei die bewegliche Spule (56) fest mit dem Kolben (32) verbunden ist, wobei der Aktuator (34) ferner wenigstens ein magnetisches Element umfasst, das fest mit der zweiten Armatur (14) verbunden ist, wobei die Spule (56) elektrisch über einen elektrischen Schaltkreis (60) versorgt wird, welche zwei Leiter (64) umfasst, die sich wenigstens teilweise entlang der Hauptvibrationsrichtung (Z0) von einem freien Ende der zweiten Armatur (14) erstrecken,
- die zweite Armatur (14) zusammen mit einer Elastomerfaltung (40) eine zweite Hydraulikkammer (38) bildet, als Kompensationskammer (38) bezeichnet, wobei die Kompensationskammer (38) ringförmig ist und sich um die Leiter (64) herum erstreckt,
- die Arbeitskammer (36) und die Kompensationskammer (38) durch wenigstens eine in der zweiten Armatur (14) ausgebildete Leitung (42; 44) in Fluidverbindung stehen, und
- die Arbeitskammer (36), die Kompensationskammer (38) und die wenigstens eine Leitung (42; 44) mit Flüssigkeit gefüllt sind.

2. Hydraulische Antivibrationsvorrichtung nach Anspruch 1, wobei die beiden Leiter (64) durch ein Mittelstück (62) verlaufen, das einen sich entlang der Hauptvibrationsrichtung (Z0) erstreckenden Hauptabschnitt aufweist, von einem freien Ende der zweiten Armatur (14) aus, wobei das Mittelstück (62) bevorzugt um die beiden elektrischen Leiter (64) herum geformt ist.

3. Hydraulische Antivibrationsvorrichtung nach Anspruch 2, wobei das Mittelstück (62) einen im Wesentlichen zylindrischen ersten Abschnitt mit einer Achse parallel zur Hauptvibrationsrichtung (Z0) umfasst, wobei sich der erste Abschnitt bevorzugt von einem freien Längsende der zweiten Armatur (14) zu einem zweiten Abschnitt des Mittelstücks (62) erstreckt, wobei sich der zweite Abschnitt von dem ersten Abschnitt im Wesentlichen unter einem Winkel zur Hauptvibrationsrichtung (Z0) zu einer Kammer (66) erstreckt, die durch die zweite Armatur (14), den Kolben (32) und die Elastomermembran (30) begrenzt ist.

4. Hydraulische Antivibrationsvorrichtung nach Anspruch 2 oder 3, wobei das Mittelstück (62) an der zweiten Armatur (14) befestigt ist, bevorzugt durch Clipsen.

5. Hydraulische Antivibrationsvorrichtung nach einem der Ansprüche 1 bis 4, mit einer elektronischen Platine (68), die am freien Ende der zweiten Armatur (14) befestigt ist, wobei die beiden elektrischen Leiter (64) über die elektronische Platine (68) mit elektrischen Kontakten (70) verbunden sind.

6. Hydraulische Antivibrationsvorrichtung nach Anspruch 5, wobei die Elektronikplatine (68) zur Bildung eines Beschleunigungssensors ausgebildet ist, wobei die Elektronikplatine (68) wenigstens einen elektrischen Kontakt (70), bevorzugt wenigstens zwei elektrische Kontakte (70), besonders bevorzugt wenigstens drei elektrische Kontakte (70), aufweist, die den oder die Beschleunigungssensorausgänge bilden.

7. Hydraulische Antivibrationsvorrichtung nach einem der vorhergehenden Ansprüche, wobei die wenigstens eine Leitung (42; 44) wenigstens einen wendelförmigen Abschnitt (42₃; 44₃) aufweist, der sich um den Aktuator (34) und/oder den Kolben (32) und/oder das Mittelstück (62) herum erstreckt, wobei sich gegebenenfalls der wendelförmige Abschnitt (42₃; 44₃) jeder wenigstens einen Leitung (42; 44) bevorzugt wenigstens über eine halbe Umdrehung um die Hauptvibrationsrichtung (Z0) erstreckt, bevorzugt über eine halbe Umdrehung, eine Umdrehung oder zwei Umdrehungen um die Hauptvibrationsrichtung (Z0).

8. Hydraulische Antivibrationsvorrichtung nach Anspruch 7, wobei jede Leitung (42; 44) zusätzlich zu dem schraubenförmigen Abschnitt (42₃; 44₃) aufweist:
- einen ersten Abschnitt (42₁; 44₁), der sich entlang der Hauptvibrationsrichtung (Z0) oder entlang einer Richtung erstreckt, die in einer Ebene senkrecht zur Hauptvibrationsrichtung (Z0) enthalten ist, wobei der erste Abschnitt (42₁; 44₁) die Arbeitskammer (36) in Fluidverbindung mit dem schraubenförmigen Abschnitt (42₃; 44₃) der Leitung (42; 44) bringt; und/oder
- einen zweiten Abschnitt (42₂), der sich entlang der Hauptvibrationsrichtung (Z0) oder entlang einer Richtung erstreckt, die in einer Ebene senkrecht zur Hauptvibrationsrichtung (Z0) enthalten ist, wobei der zweite Abschnitt (42₂) die Kompensationskammer (38) mit dem schraubenförmigen Abschnitt (42₃; 44₃) der Leitung (42; 44) in Fluidverbindung bringt;
wobei jede Leitung (42; 44) bevorzugt durch den schraubenförmigen Abschnitt (42₃; 44₃) und erste und zweite Abschnitte (42₁; 44₁; 42₂) gebildet wird.

9. Hydraulische Antivibrationsvorrichtung nach Anspruch 7 oder 8, wobei die Querschnittsfläche des schraubenförmigen Abschnitts (42₃; 44₃) jeder wenigstens einen Leitung (42; 44) im Wesentlichen konstant ist.

10. Hydraulische Antivibrationsvorrichtung nach einem der vorhergehenden Ansprüche, umfassend N Leitungen (42, 44), wobei N eine natürliche Zahl größer oder gleich zwei ist, wobei die N Leitungen (42, 44) um einen Winkel von 360°/N um die Hauptvibrationsrichtung (Z0) winkelversetzt sind.

11. Hydraulische Antivibrationsvorrichtung nach einem der vorhergehenden Ansprüche, wobei der Aktuator (34) zwischen der Kompensationskammer (38) und der Arbeitskammer (36) entlang der Hauptvibrationsrichtung (Z0) angeordnet ist.

12. Hydraulische Antivibrationsvorrichtung nach einem der vorhergehenden Ansprüche, wobei die zweite Armatur (14) eine Hydraulikkassette (16) aufweist, wobei die Hydraulikkassette (16) durch zwei koaxiale Teile (46; 48) gebildet ist, wobei die Leitung oder die Leitungen (42; 44) wenigstens teilweise durch Nuten auf der Oberfläche von wenigstens einem der beiden koaxialen Teile (46; 48) gebildet sind.

13. Hydraulische Antivibrationsvorrichtung nach einem der vorhergehenden Ansprüche, umfassend einen Begrenzer (18) der Auslenkung der ersten Armatur (12) in Bezug auf die zweite Armatur (14) in der Hauptvibrationsrichtung (Z0).

14. Hydraulische Antivibrationsvorrichtung nach einem der vorhergehenden Ansprüche, wobei sich die beiden Leiter (64) wenigstens teilweise in der Hauptvibrationsrichtung (Z0) vom freien Ende der zweiten Armatur (14) gegenüber der ersten Armatur (12) erstrecken.

15. Kraftfahrzeug (1), umfassend einen Motor (3), eine Karosserie (2) und wenigstens eine hydraulischen Antivibrationsvorrichtung (10) nach einem der vorhergehenden Ansprüche, wobei die erste Armatur (12) am Motor (3) und die zweite Armatur (14) an der Karosserie (2) befestigt ist.

## Claims

1. A hydraulic anti-vibration device (10) intended to be interposed for damping and filtering purposes between first (3; 4) and second (2) rigid elements, the hydraulic anti-vibration device (10) comprising:
- a first armature (12) intended to be fastened to the first rigid element (3; 4),
- a second armature (14) intended to be fastened to the second rigid element (2),
- a body made of an elastomer (26) which links the first armature (12) to the second armature (14), said elastomeric body (26) being adapted to be elastically deformed according to a main direction of vibration (Z0) enabling relative movements between the first armature (12) and the second armature (14), at least according to said main direction of vibration (Z0),
- a diaphragm made of an elastomer (30),
wherein
- the second armature (14) forms, together with the elastomeric body (26) and the diaphragm made of an elastomer (30), a first hydraulic chamber (36), called working chamber (36),
- the second armature (14) receives a piston (32) and an actuator (34), the actuator (34) being adapted to displace the piston (32) according to the main direction of vibration (Z0), such that the displacement of the piston (32) according to the main direction of vibration (Z0), deforms the diaphragm made of an elastomer (30),
- the actuator (34) comprises a coil (56) movable in translation according to the main direction of vibration (Z0), the movable coil (56) being secured to the piston (32), the actuator (34) further comprising at least one magnetic element, secured to the second armature (14), the coil (56) being electrically powered through an electrical circuit (60) comprising two conductors (64) extending at least partially according to the main direction of vibration (Z0), from a free end of the second armature (14),
- the second armature (14) forms, together with a bellow (40) made of an elastomer, a second hydraulic chamber (38), called compensation chamber (38), the compensation chamber (38) being annular and extending around the conductors (64),
- the working chamber (36) and the compensation chamber (38) are in fluidic communication through at least one conduit (42; 44) formed in the second armature (14), and
- the working chamber (36), the compensation chamber (38) and the at least one conduit (42; 44) are filled with a fluid.

2. The hydraulic anti-vibration device according to claim 1, wherein the two conductors (64) cross a central part (62), which comprises a main portion extending according to the main direction of vibration (Z0), from a free end of the second armature (14), the central part (62) being preferably overmoulded around the two electrical conductors (64).

3. The hydraulic anti-vibration device according to claim 2, wherein the central part (62) comprises a substantially cylindrical first portion, with an axis parallel to the main direction of vibration (Z0), the first portion preferably extending from a free longitudinal end of the second armature (14) up to a second portion of the central part (62), the second portion extending from the first portion, substantially oblique with respect to the main direction of vibration (Z0) up to a chamber (66) delimited by the second armature (14), the piston (32) and the diaphragm made of an elastomer (30).

4. The hydraulic anti-vibration device according to claim 2 or 3, wherein the central part (62) is fastened to the second armature (14), preferably by clipping.

5. The hydraulic anti-vibration device according to one of claims 1 to 4, comprising an electronic board (68) fastened to the second armature (14) at the free end of the second armature, the two electrical conductors (64) being connected to electrical contacts (70) via the electronic board (68).

6. The hydraulic anti-vibration device according to claim 5, wherein the electronic board (68) is configured to form an accelerometer, the electronic board (68) comprising at least one electrical contact (70), preferably at least two electrical contacts (70), even more preferably at least three electrical contacts (70), forming outlet(s) of the accelerometer.

7. The hydraulic anti-vibration device according to any one of the preceding claims, wherein the at least one conduit (42; 44) comprises at least one helical portion (42₃; 44₃) extending around the actuator (34) and/or the piston (32) and/or the central part (62), where appropriate, the helical portion (42₃; 44₃) of each at least one conduit (42; 44), preferably extending over at least one half-turn around the main direction of vibration (Z0), preferably over one half-turn, one turn or two turns around the main direction of vibration (Z0).

8. The hydraulic anti-vibration device according to claim 7, wherein each conduit (42; 44) includes, besides the helical portion (42₃; 44₃):
- a first portion (42₁; 44₁) extending according to the main direction of vibration (Z0) or according to a direction included in a plane normal to the main direction of vibration (Z0), the first portion (42₁; 44₁) setting the working chamber (36) in fluidic communication with the helical portion (42₃; 44₃) of the conduit (42; 44); and/or
- a second portion (42₂) extending according to the main direction of vibration (Z0) or according to a direction included in a plane normal to the main direction of vibration (Z0), the second portion (42₂) setting the compensation chamber (38) in fluidic communication with the helical portion (42₃; 44₃) of the conduit (42; 44); each conduit (42; 44) being preferably constituted by the helical portion (42₃; 44₃) and first and second portions (42₁; 44₁; 42₂).

9. The hydraulic anti-vibration device according to claim 7 or 8, wherein the section of the helical portion (42₃; 44₃) of each at least one conduit (42; 44) is substantially constant.

10. The hydraulic anti-vibration device according to any one of the preceding claims, comprising N conduits (42, 44), with N a natural number greater than or equal to two, wherein the N conduits (42, 44) are angularly offset by an angle equal to 360°/N around the main direction of vibration (Z0).

11. The hydraulic anti-vibration device according to any one of the preceding claims, wherein the actuator (34) is disposed between the compensation chamber (38) and the working chamber (36), according to the main direction of vibration (Z0).

12. The hydraulic anti-vibration device according to any one of the preceding claims, wherein the second armature (14) includes a hydraulic cartridge (16), the hydraulic cartridge (16) being formed by two coaxial parts (46; 48), the conduit(s) (42; 44) being at least partially formed by grooves at the surface of at least one of the two coaxial parts (46; 48).

13. The hydraulic anti-vibration device according to any one of the preceding claims, comprising a limiter (18) of the travel of the first armature (12) relative to the second armature (14) according to the main direction of vibration (Z0).

14. The hydraulic anti-vibration device according to any one of the preceding claims, wherein the two conductors (64) extend at least partially according to the main direction of vibration (Z0), from the free end of the second armature (14) opposite to the first armature (12).

15. A motor vehicle (1) comprising an engine (3), a body (2) and at least one hydraulic anti-vibration device according to any one of the preceding claims, the first armature (12) being fastened to the engine (3) and the second armature (14) being fastened to the body (2).
